# EUROPÄISCHE PATENTSCHRIFT

(11) **EP 3 509 830 B1**
(45) Veröffentlichungstag und Bekanntmachung des Hinweises auf die Patenterteilung: **30.06.2021**
(21) Anmeldenummer: 17768049.3
(22) Anmeldetag: 06.09.2017
(51) Int. Cl.: B29C 70/54

(54) **TAPELEGEVORRICHTUNG UND TAPELEGEVERFAHREN MIT VERSCHWENKBARER SCHNEIDEINRICHTUNG**
TAPE-LAYING DEVICE AND TAPE-LAYING METHOD USING A PIVOTAL CUTTING DEVICE
PROCÉDÉ ET DISPOSITIF DE POSE DE BANDE COMPORTANT UN DISPOSITIF DE COUPE PIVOTANT

(30) Priorität: 08.09.2016 DE 102016116798
(43) Veröffentlichungstag der Anmeldung: 17.07.2019
(73) Patentinhaber: Dieffenbacher GmbH Maschinen- und Anlagenbau, 75031 Eppingen (DE)
(72) Erfinder: GRAF, Matthias, 75031 Eppingen (DE)
(74) Vertreter: Lemcke, Brommer & Partner Patentanwälte Partnerschaft mbB
(86) Internationale Anmeldenummer: PCT/EP2017/072385
(87) Internationale Veröffentlichungsnummer: WO 2018/046558

(56) Entgegenhaltungen:
- EP-A1- 0 128 826
- WO-A1-2014/083196
- DE-A1-102008 018 726
- DE-A1-102012 111 761
- US-A- 4 531 992
- US-A1- 2006 137 827

## Beschreibung

Die vorliegende Erfindung bezieht sich auf eine Tapelegevorrichtung nach dem Oberbegriff des Anspruch 1, sowie auf ein Tapelegeverfahren nach dem Oberbegriff des Anspruchs 11.

Die Anwendungen für Faserverbundwerkstoffe sind über die vergangenen Jahrzehnte immer weiter gestiegen, insbesondere wenn sie als preiswerte Alternative zu den metallischen Werkstoffen gesehen werden konnten, mit den Vorteilen der Gestaltungsfreiheit und anwendungsspezifischer Formulierungsmöglichkeiten. Speziell der Werkstoff CFK (Carbon-faserverstärkter Kunststoff) hat ein extrem hohes Leichtbaupotential, wobei er sich zugleich durch seine hohe Festigkeit und sehr hohe Struktursteifigkeit auszeichnet. Letzteres ist beispielsweise im Automobilbau ein wichtiges Kriterium.

Die heutigen Entwicklungstätigkeiten für Produktionsanlagen zur Verarbeitung von Faserverbundwerkstoffen reichen daher von reiner Maschinenentwicklung bis hin zu schlüsselfertigen Produktionssystemen. Erstere umfassen für gewöhnlich Preform-Herstelleinheiten, Presseinheiten und ggf. Injektionseinheiten sowie Nachbearbeitungseinheiten - letztere die entsprechende Automatisierung für das Preform-Handling, eine eventuelle Werkzeugreinigung, die Bauteilentnahme und dergleichen mehr.

Die automatisierbare Herstellung der Preform stellt eine Schlüsseltechnologie im Herstellungsprozess von endlosfaserverstärkten Faserverbundbauteilen zur Realisierung einer effizienten Großserienfertigung mit reproduzierbarer stabiler Bauteilqualität dar. Aber auch bei sogenannten Hybridbauteilen, also formgepressten Blechen, die vornehmlich mit Carbonfaser-Halbzeugen verpresst werden, um kritische Belastungszonen zusätzlich zu verstärken, müssen sich alle Produktions-Einheiten anlagen- und steuerungstechnisch integrieren lassen, wenn eine hinreichende Produktivität erreicht werden soll.
Zur Herstellung von endlosfaserverstärkten Bauteilen werden heute überwiegend textile Halbzeuge, insbesondere Faser-Halbzeuge wie mit einem Binder (Schmelzkleber) benetzte und/oder mit einer Matrix teilweise oder vollständig imprägnierte Faser-Garne und/oder Flächengebilde (sog. Prepregs) wie Fasergewebe, Fasergestricke, Fasergelege oder Fasermatten verwendet. Die Matrix von faserverstärkten Kunststoffen hat die Aufgabe, die hochbelastbaren Fasern einzubetten (Stützfunktion) und deren Zwischenraum vollständig auszufüllen (Sperrfunktion).

An Binder- und/oder Matrix-Werkstoffen können grundsätzlich Materialien aus den Gruppen der Thermoplaste oder der Duroplaste und ggf. zusätzlicher elastifizierender Komponenten, wie Elastomere, eingesetzt werden, welche sich in der Festigkeit, der maximalen Dehnung, der Einsatztemperatur, der Verarbeitungsgeschwindigkeit und der Chemikalienbeständigkeit unterscheiden. Duroplastische Formmassen lassen sich durch Temperatureinwirkung plastifizieren, sind in diesem Moment formbar und härten dann irreversibel unter Druck und Temperatur aus. Im Gegensatz zu den Thermoplasten bestehen die Elastomere und Duroplaste (auch Duromere genannt) nach der Verarbeitung, d. h. im gebrauchsfertigen Zustand, aus mehr oder weniger stark vernetzten Makromolekülen, die in der Regel weder schmelzbar noch löslich sind.

Aus diesen Halbzeugen, die als Rollen oder Plattenware in Standardformaten zur Verfügung stehen, werden in einem Schneidprozess Zuschnitte erzeugt, die in der Regel das umgeformte Bauteil vollflächig auskleiden. Beim Schneiden der Zuschnitte entsteht, je nach Bauteilgeometrie ein signifikanter Schneidabfall, der nicht verarbeitet werden kann und die Effizienz dieses Prozesses erheblich verschlechtert.

Zur Verbesserung der Ressourceneffizienz können endlosfaserverstärkte Bauteile über Faser- oder auch als Tape-Legeverfahren bekannt gewordene Verfahren wesentlich verschnittärmer bzw. verschnittfrei hergestellt werden. Speziell die Verwendung von Tapes aus thermoplastischen Endlosfasern erweist sich als eine sehr attraktive Prozessvariante. Hierbei stellt insbesondere das Legen des für gewöhnlich als Tape vorliegenden Faserverbundwerkstoff zum Aufbau eines Laminats eine besondere Herausforderung dar.

Mit einem Tape ist im Zusammenhang mit der vorliegenden Erfindung vorzugsweise jegliche Art von bahnförmigem Material, insbesondere ein Prepregmaterial, das beispielsweise eine Breite zwischen 30 und 200 mm aufweist, gemeint, welches für ein Ablegen mittels einer Tapelegevorrichtung geeignet ist. Mit "Prepregmaterial" sind vorliegend insbesondere Fasergarne (Rovings), Fasergelege und/oder Fasergewebe gemeint, welche mit einem Binder benetzt und/oder mit einer Matrix, beispielsweise einer Duroplastmatrix oder Thermoplastmatrix, teilweise oder vollständig imprägniert, insbesondere vorimprägniert, sind.

Bei den Fasern handelt es sich insbesondere um Kohlenstofffasern, ist aber in gleicher Weise auch für Glasfasern oder andere, insbesondere künstlich hergestellte, Fasern anwendbar.

Das Tape kann auf einem Trägermaterial angeordnet sein, insbesondere einer Trägerfolie oder einem Trägerpapier, das während des Ablegens des Tapes zum Aufbau des Laminats sich von dem Trägermaterial löst, wobei das Trägermaterial mittels einer geeigneten Einrichtung der Tapelegevorrichtung beseitigt, beispielsweise aufgewickelt, wird. Bevorzugt können jedoch auch Tapes Verwendung finden, die keine Trägermaterialien mehr benötigen.

Zur Verarbeitung von Tapes ist bekannt, diese von einer Spule oder Rolle abzuziehen, auf Länge zu schneiden und auf einen Legetisch bzw. einer bereits auf dem Legetisch abgelegten Tapestruktur abzulegen. Mit dem Ablegen eines Tapestreifens bzw. Tapes wird dieser über eine Anzahl an Ultraschall-Schweißköpfen punktweise mit der darunter liegende Tapeschicht verbunden.

Zur Verarbeitung von Tapes und zur Durchführung eines Tape-Legeverfahrens werden vielfach automatische Vorrichtungen eingesetzt, welche in der Lage sind ein Tape strukturiert abzulegen. Bekannt sind insbesondere sog. Tapelegevorrichtungen, unter welchen vorliegend beispielsweise auch eine sog. Fiber-Placement-Vorrichtung zu verstehen ist.

Eine beispielhafte Tapelegevorrichtung ist aus dem Dokument WO 2014/083196 A1 bekannt, das eine Tapelegevorrichtung mit mehreren Material-Zuführungseinheiten zum Zuführen von Tape-Bandmaterial beschreibt. Mit jeweiligen Greifmechanismen werden Streifen aus den Material-Zuführungseinheiten gezogen und mit Schneideinrichtungen auf Länge geschnitten, so dass von dem Tape-Bandmaterial jeweilige Tapestreifen bzw. Tapes abgetrennt werden. Anschließend werden die Tapes in Führungsbahnen positioniert und mit jeweiligen Bandhefteinheiten werden die Tapes auf der Bearbeitungsfläche eines Legetisches platziert. Der Legetisch kann sich nach Bedarf so bewegen, dass die Streifen in den gewünschten Positionen und Ausrichtungen platziert werden können. Die Abtrennung der Tapes erfolgt dabei jeweils in einer Richtung quer zur Längsrichtung des Tape-Bandmaterials, so dass jeweils rechteckige Streifen abgetrennt werden.

Derartige Tapelegevorrichtungen werden meist dazu verwendet, um bauteilspezifische Flächen mit verschiedensten Bauteilkonturen zu belegen. Bei gekrümmten Konturabschnitten erfordert dies, dass mittels der rechteckig zugeschnittenen Tapes die Kontur nur nach Art einer Zick-Zack-Approximation angenähert werden kann. Abhängig von dem Verlauf der Kontur und der Tapebreite entsteht dabei ein unerwünschter Materialverschnitt. Der Materialverschnitt könnte gesenkt werden, indem die Tapebreite verkleinert wird, das heißt, indem schmälere bis sehr schmale Tapes nebeneinander verlegt werden, was allerdings wiederum den Nachteil aufweist, dass dadurch die Legerate verringert wird und sich die Gesamtzeit zum Legen des gewünschten Bauteils entsprechend erhöht.

Aus der US 4,531,992 A, die den Oberbegriff der Ansprüche 1 und 11 offenbart, ist eine Vorrichtung zum Legen von Tapes auf einen Legetisch bekannt, wobei das Tape-Bandmaterial zunächst in einer von der Tapelegevorrichtung getrennten Einrichtung nach Entfernen eines Trägermaterials einer Schneideinrichtung zugeführt und zugeschnitten wird und die Tapes anschließend auf eine Trägerfolie appliziert werden, die zu einer Rolle aufgewickelt wird, welche in die Tapelegevorrichtung eingebracht wird und dort von der Trägerfolie gelöst und auf einem Legetisch abgelegt wird.
Die US 2006/137827 A1 beschreibt eine Schneidevorrichtung zum Schneiden klebriger Composite-Tapes. Die Schneideinheit umfasst eine fixe und eine bewegliche Klinge und eine Vorrichtung zur Aufnahme eines vom Bandmaterial abgetrennten Tapes, welche an der beweglichen Klinge angeordnet ist und sich mit dieser mitbewegt, so dass das abgetrennten Tape dort zunächst anhaften und anschließend einem weiteren Bearbeitungsschritt übergeben werden kann.

Die US 8,048,253 B2 beschreibt ebenfalls eine Tapelegevorrichtung, in welcher ein Tape-Bandmaterial jeweiligen Schneideinrichtungen zugeführt wird, welche jeweilige Tapes abtrennen, die anschließend auf die Bearbeitungsfläche eines Legetisches platziert werden. Das Tape-Bandmaterial und die abgetrennten Tapes werden dabei jeweils in Führungsschienen geführt, die zu beiden Seiten des Bandes bzw. der Streifen angeordnet sind, wobei die Kanten des Bandes bzw. der Streifen in Nuten, die in den Führungsschienen vorgesehen sind, gehalten werden. Der Transport des Tape-Bandmaterials bzw. des Tapes erfolgt mittels angetriebener Walzen. In dem Dokument wird weiter vorgeschlagen, dass die Schneideinrichtungen jeweils eine Schneidmessereinheit aufweisen, die um eine vertikale Mittelachse verschwenkbar ist. Auf diese Weise ist es möglich, das Tape-Bandmaterial in einem entsprechend verstellbaren Winkel zu schneiden. Um ein Durchhängen des Tape-Bandmaterials bzw. der abgetrennten Tapestreifen vor bzw. hinter der Schneidmessereinheit zu vermeiden, wird vorgeschlagen, dass die seitlichen Führungsschienen, welche das Tape-Bandmaterial bzw. die abgetrennten Tapes halten, in Bandlängsrichtung verstellbar sind, und entsprechend der Verschwenkung der Schneidmessereinheit verstellt werden.

Durch ein entsprechendes Verstellen der Schneidmessereinheit ist es hierbei möglich, die jeweiligen Tapes jeweils näherungsweise entsprechend der gewünschten, zu legenden Bauteilkontur zuzuschneiden, so dass unerwünschter Materialverschnitt verringert werden kann. Allerdings besteht hierbei der Nachteil, dass der für den Transport der abgetrennten Tapes notwendige Walzenantrieb, der der Schneidmessereinheit nachgeordnet ist, in einem hinreichend weiten Abstand von der Verschwenkachse der Schneidmessereinheit angeordnet ist, um das Verschwenken der Schneidmessereinheit in einem hinreichend großen Winkelbereich zu ermöglichen. Insbesondere in Tapelegevorrichtungen, in denen auch breitere Tapebänder verarbeitet werden sollen, beispielsweise Tapes von einer Breite von 150 mm, 200 mm oder mehr, und bei großen Verschwenkwinkeln von 45°, 60° oder mehr, kann dies zur Folge haben, dass der Walzenantrieb in einem Abstand von beispielsweise 100 mm, 150 mm oder mehr hinter der Schneidmessereinheit angeordnet werden muss. Dementsprechend ist es auf diese Weise nicht mehr möglich, kürzere Tapes zu schneiden und zu legen, die eine geringere Länge aufweisen, da in diesem Fall der Einzug und der Weitertransport durch den Walzenantrieb nicht mehr möglich wäre. Entsprechend wirkt sich dies auch auf den Materialverschnitt aus, da jeder Tape-Verschnitt eine Mindestlänge besitzen muss um sicher aus der Anlage ausgeschleust werden zu können.

Darüber hinaus besteht bei beiden dieser bekannten Tapelegevorrichtungen der Nachteil, dass wegen dem nur seitlichen Führen und Halten der Tapestreifen bzw. der Tapes mittels der Führungsschienen das zu verarbeitende Tape-Bandmaterial eine hinreichend hohe innere Steifigkeit aufweisen muss, so dass es nicht dazu kommt, dass das Tape-Bandmaterial durchhängt und aus den Führungsschienen fällt. Dies kann eine unerwünschte Einschränkung hinsichtlich der verarbeitbaren Materialien, Dicken und/oder Breiten darstellen.
Es ist daher eine Aufgabe der Erfindung, eine verbesserte Tapelegevorrichtung und ein verbessertes Tapelegeverfahren anzugeben, welches die vorstehenden Nachteile überwindet.

Es ist eine weitere Aufgabe der Erfindung, eine verbesserte Tapelegevorrichtung und ein verbessertes Tapelegeverfahren anzugeben, die es erlauben, ein Tapelegen auch mittels kurzer und kürzester Tapes mit möglichst geringem Materialverschnitt zu legen.
Es ist eine nochmals weitere Aufgabe der Erfindung, eine verbesserte Tapelegevorrichtung und ein verbessertes Tapelegeverfahren anzugeben, welche flexibel und rasch zum effizienten Ablegen von Tape-Bandmaterial unterschiedlicher Breiten eingesetzt werden können.
Diese und andere Aufgaben der vorliegenden Erfindung werden mit einer Tapelegevorrichtung und einem Tapelegeverfahren gelöst. Weitere bevorzugte Ausführungsformen sind in den abhängigen Ansprüchen dargelegt.

Als eine Lösung wird eine Tapelegevorrichtung gemäß Anspruch 1 angegeben, aufweisend eine Materialzuführungseinheit zum Zuführen eines Tape-Bandmaterials, eine Schneideinrichtung mit einem um eine Drehachse im Winkel verstellbaren Schneidmittel zum Abtrennen eines Tapes von dem Tape-Bandmaterial, und eine Legeeinrichtung zum Aufnehmen und zum Platzieren des abgetrennten Tapes auf einem Legetisch. Die Schneideinrichtung weist ein flächiges Transportelement als ein um Umlenkrollen umlaufendes, endloses Transportband auf, wobei das Tape-Bandmaterial zwischen das Schneidmittel und das als ein um Umlenkrollen umlaufendes, endloses Transportband ausgeführte flächige Transportelement zugeführt werden kann und das Tape-Bandmaterial auf bzw. über dem als ein um Umlenkrollen umlaufendes, endloses Transportband ausgeführten flächigen Transportelement geschnitten werden kann, um das Tape von dem Tape-Bandmaterial abzutrennen.

Die Drehachse ist vorzugsweise im Wesentlichen senkrecht zur Ebene der Auflagefläche des flächigen Transportelements angeordnet und somit im Wesentlichen senkrecht zur Ebene steht, in der das Tape-Bandmaterial zugeführt wird.

In dem ein flächiges Transportelement als ein endlos umlaufendes Transportband vorgesehen wird, das sich fortlaufend in Transportrichtung des Tape-Bandmaterials unter dem Schneidmittel hindurch bewegt, und indem das Abtrennen und Vereinzeln einzelner Tapes von dem Tape-Bandmaterial auf bzw. über dem als ein endlos umlaufendes Transportband ausgeführten flächigen Transportelement erfolgt, wird erreicht, dass ein jeweils abgetrenntes Tape unmittelbar hinter dem Schneidmittel auf das flächige Transportelement fällt bzw. auf diesem aufliegt, und von dem flächigen Transportelement sicher weitertransportiert werden kann. Es ist auf diese Weise möglich, mittels der Tapelegevorrichtung auch kurze und kürzeste Tapes, insbesondere auch kurze und kürzeste, winkelig zugeschnittene Tapes zu legen.

Vorzugsweise kann in der Schneideinrichtung, oder mit dieser verbunden, weiter eine Vakuumeinrichtung vorgesehen werden, welche mit dem flächigen Transportelement derart verbunden ist, um das Tape-Bandmaterial und/oder die abgetrennten Tapes mittels von der Vakuumeinrichtung erzeugtem Unterdruck auf dem flächigen Transportelement zu halten. Auf diese Weise kann das Tape-Bandmaterial und/oder kann ein abgetrenntes Tape sicher auf dem flächigen Transportelement gehalten werden, ohne dass es während des Abtrennens und/oder während des Transports des Tape-Bandmaterials und/oder des abgetrennten Tapes zu unerwünschten Lageveränderungen kommt, welche zu einer ungenauen Ablage des Tapes führen könnten.

Es kann dabei vorgesehen werden, dass in der Schneideinrichtung das Tape-Bandmaterial auf dem flächigen Transportelement, insbesondere dem als Transportband ausgeführten flächigen Transportelement, aufliegend zwischen das Schneidmittel und dem flächigen Transportelement zugeführt wird und das Tape-Bandmaterial auf dem flächigen Transportelement aufliegend geschnitten wird. In einer vorteilhaften Weiterbildung kann es vorgesehen werden, dass das Schneidmittel in einem Bereich von 0 bis 3 mm, bevorzugt in einem Bereich von 0,3 mm bis 2 mm, besonders bevorzugt in einem Bereich von 0,5 mm bis 1,5 mm in das flächige Transportelement hinein schneidet.

Alternativ kann vorgesehen werden, dass die Schneideinrichtung weiter eine Schneidplatte aufweist, die über dem flächigen Transportelement, insbesondere dem als Transportband ausgeführten flächigen Transportelement und in Transportrichtung des Tape-Bandmaterials vor dem Schneidmittel angeordnet ist, wobei das Tape-Bandmaterial auf der Schneidplatte aufliegend geführt ist, wobei die Schneidplatte gemeinsam mit dem Schneidmittel verschwenkbar ist, und wobei die Schneidplatte eine Schneidkante definiert, entlang derer das Schneidmittel das Tape-Bandmaterial zur Abtrennung des Tapes schneidet. Die Schneidplatte kann insbesondere halbkreisförmig ausgebildet sein und/oder eine Dicke im Bereich von 1 bis 5 mm, bevorzugt im Bereich von 2 bis 4 mm, besonders bevorzugt eine Dicke von 3 mm aufweisen.

Die Verwendung einer Schneidplatte in der Schneideinrichtung bietet mehrere Vorteile: Zum einen bildet die Schneidplatte eine Schneidkante aus und dient somit als Gegenmesser für das Schneidmittel. Zum anderen schirmt die Schneidplatte das Tape-Bandmaterial gegenüber dem flächigen Transportelement ab, welches unterhalb der Schneidplatte verlaufen kann. Insbesondere wenn das flächige Transportelement mit einer Vakuumeinrichtung verbunden ist, dient die Schneidplatte dazu, dass das Tape-Bandmaterial von dem flächigen Transportelement abgeschirmt wird und erst die geschnittenen Tapes mittels dem erzeugten Unterdruck auf dem flächigen Transportelement gehalten werden.

In einer vorteilhaften Ausgestaltung weist das Schneidmittel eine Führungskante auf, welche sich über die Schneidplatte erstreckt, so dass stets ein Schnitt entlang der Schneidkante der Schneidplatte erfolgt.

Alternativ oder in Kombination zu den vorgenannten Ausgestaltungen sind die Schneidkante der Schneidplatte und die Schneidkante des Schneidmittels nicht parallel ausgerichtet, sondern bilden einen Öffnungswinkel, so dass durch eine Hubbewegung des Schneidmittels ein Abschneiden eines Tapes vom Tape-Bandmaterial erfolgt, ähnlich zu einem Scherenschnitt.

Vorzugsweise ist das Schneidmittel als ein Schneidmesser ausgeführt. Besonders bevorzugt ist das Schneidmesser im Bereich eines Endes an einem Drehgelenk um eine horizontale Achse schwenkbar gelagert und ist im Bereich des anderen Endes in einer Kulissenführung geführt.

Es kann auch vorgesehen sein, dass das Schneidmittel mittels einer Ultraschalleinrichtung mit Ultraschall beaufschlagt wird, um das Schneiden des Tape-Bandmaterials zu Tapes zu unterstützen.

Bevorzugt weist die Legeeinrichtung ein flächiges Transportelement, beispielsweise ein um Umlenkrollen umlaufendes, endloses Transportband, und eine mit dem flächigen Transportelement verbundene Vakuumeinrichtung auf, wobei die einzelnen Tapes auf einer Unterseite der Legeeinrichtung aufgenommen und mittels dem von der Vakuumeinrichtung erzeugten Unterdruck an dem flächigen Transportelement gehalten werden können. Alternativ und/oder ergänzend kann vorgesehen sein, dass zwischen der Schneideinrichtung und der Legeeinrichtung zumindest eine Zuführungseinrichtung angeordnet ist, welche ein flächiges Transportelement, beispielsweise ein um Umlenkrollen umlaufendes, endloses Transportband aufweist, und derart eingerichtet ist, in der Schneideinrichtung abgetrennte Tapes aufzunehmen und der Legeeinrichtung zuzuführen, wobei die einzelnen Tapes auf dem flächigen Transportelement aufliegend transportiert werden.

Als flächige Transportelemente können in der Legeeinrichtung und/oder Zuführungseinrichtung beispielsweise Transportbänder, welche endlos an Umlenkrollen geführt sind, oder Transportelemente mit einer plattenförmigen Auflagefläche, beispielsweise Transport-Tabletts, welche in und entgegen der Transportrichtung bewegbar sind, in Betracht gezogen werden.

Indem der Transport und das Ablegen von Tapes mittels flächiger Transportelemente, beispielsweise Transportbändern, bewirkt wird, wird die Möglichkeit geschaffen, Tape-Bandmaterial unterschiedlicher Breiten einzusetzen, und rasch zwischen unterschiedlichen Breiten zu wechseln, ohne dass hierzu eine Umkonfiguration der Tapelegevorrichtung erforderlich ist. Insbesondere ist es nicht erforderlich, wie im Stand der Technik bekannt, Führungsschienen für die Tapes umzukonfigurieren und auf eine neue Breite einzurichten. Gleichzeitig wird es durch den Transport und das Ablegen von Tapes mittels flächiger Transportelemente, beispielsweise Transportbändern oder Transportplatten, auch möglich, Tapes auch großer Breite und mit geringer innerer Steifigkeit zu legen, da hierbei prinzipbedingt nicht die Gefahr besteht, dass die Tapes aus hierfür vorgesehenen Führungsschienen fällt.
Alternativ oder in Kombination kann die Schneideinrichtung auch als Zuführeinrichtung ausgebildet sein. Das Tape-Bandmaterial kann somit durch das Schneidmesser in der Schneideinrichtung zu einem Tape geschnitten werden und das Transportband der Schneideinrichtung kann dieses Tape dann der Legeeinrichtung zuführen.

Als eine weitere Lösung wird ein Tapelegeverfahren gemäß Anspruch 11 angegeben, umfassend: Zuführen eines Tape-Bandmaterials mittels einer Materialzuführungseinheit; Abtrennen eines Tapes von dem Tape-Bandmaterial mittels einer Schneideinrichtung, wobei die Schneideinrichtung ein im Winkel verstellbares Schneidmittel aufweist, und Aufnehmen und Platzieren des abgetrennten Tapes auf einem Legetisch mittels einer Legeeinrichtung, wobei die Schneideinrichtung ein flächiges Transportelement als ein um Umlenkrollen umlaufendes, endloses Transportband aufweist, und wobei das Tape-Bandmaterial zwischen das Schneidmittel und das als ein um Umlenkrollen umlaufendes, endloses Transportband ausgeführte flächige Transportelement zugeführt wird und das Tape-Bandmaterial auf bzw. über dem als ein um Umlenkrollen umlaufendes, endloses Transportband ausgeführten flächigen Transportelement geschnitten wird, um das Tape von dem Tape-Bandmaterial abzutrennen.
Bevorzugt wird weiter vorgesehen, dass das Tape-Bandmaterial und/oder das abgetrennte Tape mittels von einer Vakuumeinrichtung erzeugtem Unterdruck auf dem flächigen Transportelement gehalten wird.
In einer bevorzugten Weiterbildung des Verfahrens kann dabei vorgesehen sein, dass in der Schneideinrichtung das Tape-Bandmaterial auf dem flächigen Transportelement aufliegend zwischen das Schneidmittel und dem flächigen Transportelement zugeführt wird und das Tape-Bandmaterial auf dem flächigen Transportelement aufliegend geschnitten wird.
Alternativ kann vorgesehen sein, dass in die Schneideinrichtung weiter eine Schneidplatte aufweist, die über dem flächigen Transportelement und in Transportrichtung des Tape-Bandmaterials vor dem Schneidmittel angeordnet ist, wobei das Tape-Bandmaterial auf der Schneidplatte aufliegend geführt wird, wobei die Schneidplatte gemeinsam mit dem Schneidmittel verschwenkt wird, und wobei die Schneidplatte eine Schneidkante definiert, entlang derer das Schneidmittel das Tape-Bandmaterial zur Abtrennung von Tapes schneidet.

Weiter vorzugsweise kann vorgesehen sein, dass die Legeeinrichtung ein flächiges Transportelement, vorzugsweise ein um Umlenkrollen umlaufendes, endloses Transportband und eine mit dem flächigen Transportelement verbundene Vakuumeinrichtung aufweist, wobei die einzelnen Tapes auf einer Unterseite der Legeeinrichtung aufgenommen und mittels dem von der Vakuumeinrichtung erzeugten Unterdruck an dem flächigen Transportelement gehalten werden, und/oder dass zwischen der Schneideinrichtung und der Legeeinrichtung zumindest eine Zuführungseinrichtung angeordnet ist, welche ein flächiges Transportelement, vorzugsweise ein um Umlenkrollen umlaufendes, endloses Transportband, aufweist, wobei in der Schneideinrichtung abgetrennte Tapes von der Zuführungseinrichtung aufgenommen, auf dem flächigen Transportelement aufliegend transportiert und der Legeeinrichtung zugeführt werden.

Weiter bevorzugt kann vorgesehen sein, dass eine Seitenkante des Tape-Bandmaterials bzw. des Tapes als Führungskante dient, die in ihrer Position unverändert bleibt, so dass sich eine Änderung der Breite des Tape-Bandmaterials nur auf der Gegenseite auswirkt, wobei die Führungskante bevorzugt mit einer Seitenkante des flächigen Transportelements der Schneideinrichtung und/oder mit einer Seitenkante des flächigen Transportelements, der Zuführungseinrichtung und/oder der Legeeinrichtung, insbesondere einer Seitenkante des Transportbandes der vorgenannten Einrichtungen übereinstimmt.

Das Tapelegeverfahren kann vorzugsweise mit einer Tapelegevorrichtung wie vorstehend angegeben ausgeführt werden.

Die Erfindung wird im Nachfolgenden an Hand von beispielhaften Ausführungsformen beschrieben, mit Bezug auf die Zeichnungen:
- Fig. 1: zeigt eine Tapelegevorrichtung gemäß einer bevorzugten Ausführungsform in einer schematischen Querschnittsansicht von der Seite;
- Fig. 2: zeigt die Tapelegevorrichtung der Fig. 1 in einer schematischen Draufsicht;
- Fig. 3: zeigt schematisch eine Schneideinrichtung gemäß einer Ausführungsform in einer Seitenansicht;
- Fig. 4A, 4B: stellen in einer schematischen Draufsicht die Schneideinrichtung der Fig. 3 in unterschiedlichen Winkelstellungen dar; und
- Fig. 5: stellt schematisch eine Schneideinrichtung gemäß einer weiteren Ausführungsform dar.

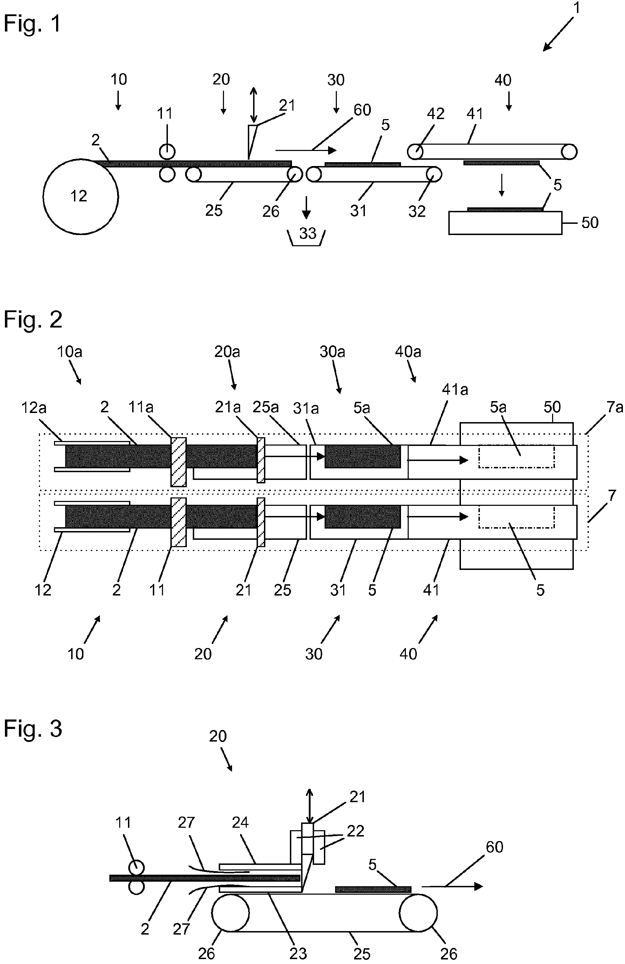

In der Fig. 1 ist eine Tapelegevorrichtung 1 gemäß einer Ausführungsform in einer schematischen Querschnittsansicht dargestellt. Wie in Fig. 1 gezeigt wird in der Tapelegevorrichtung 1 ein Tape-Bandmaterial 2, das beispielsweise auf einer Spule 12 aufgewickelt bereitgestellt wird, mittels einer Materialzuführungseinheit 10 von der Spule 12 abgewickelt und einer der Materialzuführungseinheit 10 nachgeordneten Schneideinrichtung 20 zugeführt. Zu diesem Zweck kann die Materialzuführungseinheit 10 ein Paar von Antriebswalzen 11 aufweisen, die einen Walzenantrieb, auch als Mangelantrieb bezeichnet, bilden, der für den Transport des Tape-Bandmaterials 2 sorgt. Die Antriebswalzen 11 werden dabei von einem oder von mehreren Motoren (nicht dargestellt) unter Steuerung einer Steuereinrichtung (nicht dargestellt) angetrieben, so dass das Tape-Bandmaterial 2 mit einer gewünschten Geschwindigkeit und/oder einer gewünschten Länge in die Schneideinrichtung 20 "geschoben" und derart zugeführt wird.

In der Schneideinrichtung 20 wird das Tape-Bandmaterial 2 mittels eines Schneidmittels, das beispielsweise als ein Schneidmesser 21 ausgeführt ist, geschnitten, um von dem Tape-Bandmaterial 2 einzelne Tapes 5 einer jeweils gewünschten Länge abzutrennen. Das Schneidmesser 21 ist dabei winkelig verstellbar, so dass nicht nur Schnitte quer zur Bandrichtung oder zur Transportrichtung 60 des Tape-Materialbandes 2 ausgeführt werden können, sondern mittels einer entsprechenden Verstellung des Schneidmessers 21 um einen Winkel von beispielsweise ± 45° relativ zur Querrichtung des Tape-Bandmaterials 2, welche sich entlang deren Breite erstreckt, auch Tapes 5 abgeschnitten werden können, die in einem entsprechenden, gewünschten Winkel zugeschnitten sind.

Nachdem die Tapes 5 derart in der Schneideinrichtung 20 von dem Tape-Bandmaterial 2 abgetrennt und vereinzelt wurden, werden die Tapes 5 auf eine Zuführungseinrichtung 30 übergeben, welche die Tapes 5 einer Legeeinrichtung 40 zuführt und an diese übergibt.

Solche Tapes 5, welche für die weiteren Produktionen nicht brauchbar sind, sowie Verschnittmaterial für beispielsweise Korrekturschnitte, können zwischen der Schneideinrichtung 20 und der Zuführungseinrichtung 30 aus der Tapelegevorrichtung 1 ausgeschleust und beispielsweise einen Abwurfbehälter 33 zugeführt werden.

Die Legeeinrichtung 40 ist über einem Legetisch 50 angeordnet und kann in vertikaler Richtung relativ zum Legetisch 50 bewegt werden, so dass die Legeeinrichtung 40 jeweils ein einzelnes Tape 5 auf dem Legetisch 50 platzieren und ablegen kann. Beispielsweise kann eine Linearführung (nicht dargestellt) vorgesehen sein, mittels der die Legeeinrichtung 40 in vertikaler Richtung auf den Legetisch 50 abgesenkt werden kann, um die Tapes 5 auf einer Arbeitsfläche des Legetischs 50, oder einer bereits zuvor auf der Arbeitsfläche des Legetisches 50 ausgebildeten Tapestruktur abzulegen, und gegebenenfalls kurz und leicht anzudrücken. Nach dem Ablegen des Tapes 5 wird die Legeeinrichtung 40 wieder angehoben, um ein nächstes Tape 5 aufzunehmen. Es sei hierbei bemerkt, dass im Sinne dieses Dokuments sowohl das Platzieren und Ablegen eines Tapes 5 auf der Arbeitsfläche des Legetisches 50, als auch das Ablegen eines Tapes 5 auf bereits zuvor auf dem Legetisch 50 abgelegten Tape 5, insbesondere auf einer zuvor ausgebildeten Tapelage, als ein Platzieren und Ablegen des Tapes 5 auf dem Legetisch 50 verstanden werden soll.

Um das Absenken der Legeeinrichtung 40 zu ermöglichen, kann bei der Ausführungsform der Fig. 1 vorgesehen sein, dass die Zuführungseinrichtung 30 ebenfalls und gemeinsam mit der Legeeinrichtung 40 vertikal abgesenkt und angehoben wird. Dies kann insbesondere dadurch geschehen, dass die Zuführungseinrichtung 30 und die Legeeinrichtung 40 zu einer als Legekopf 7 bezeichneten Einheit zusammengefasst werden, wie nachstehend mit Bezug auf die Fig. 2 näher erläutert, und der Legekopf 7 als Ganzes vertikal bewegt wird, um ein Tape 5 abzulegen. Alternativ ist es auch denkbar, den Legekopf 7 bzw. die Legeeinrichtung 40 feststehend auszubilden, und den Legetisch 50 hebbar auszugestalten, so dass zur Ablage des Tapes 5 der Legetisch 50 angehoben wird. Im Übrigen ist es bevorzugt, dass der Legetisch 50 unter Steuerung der Steuereinrichtung (nicht dargestellt) um eine vertikale Drehachse Z gedreht werden kann, und/oder in horizontaler Richtung in x- und/oder y-Richtung bewegt werden kann, um eine gewünschte relative Positionierung des Tapes 5 relativ zum Legetisch 50 zu ermöglichen.

Zur Erhöhung der Legerate ist es insbesondere vorgesehen, dass mehrere Tapes 5 simultan, das heißt, insbesondere zeitgleich und mehrspurig gehandhabt werden, wobei durch eine solche Parallelisierung vorteilhaft die Anzahl gelegter Tapes 5 pro Abfolge entsprechend multipliziert wird. Entsprechend ist in der Tapelegevorrichtung 1 dieser Ausführungsform, wie in der Draufsicht in Fig. 2 gezeigt, bevorzugt vorgesehen, dass die entsprechenden Einheiten in entsprechend multipler Ausführung vorgesehen sind. So können, wie in Fig. 2 dargestellt, jeweils zwei Spulen 12, 12a vorgesehen sein, von welchen mittels zwei Materialzuführungseinheiten 10, 10a mit insgesamt zwei Paaren von Antriebswalzen 11, 11a zwei Stränge eines Tape-Bandmaterials 2 abgezogen und zu zwei jeweiligen Schneideinrichtungen 20, 20a zugeführt werden, wo mittels zweier Schneidmesser 21, 21 a zwei jeweilige Tapes 5, 5a abgetrennt und mittels zweier Zuführungseinrichtungen 30, 30a zu zwei Legeeinrichtungen 40, 40a zugeführt werden. Mittels der zwei Legeeinrichtungen 40, 40a können somit zwei Tapes 5, 5a gleichzeitig auf dem Legetisch 50 platziert und abgelegt werden.

Wie in der Fig. 2 angedeutet, können die Materialzuführungseinheit 10a, die Schneideinrichtung 20a, die Zuführungseinrichtung 30a und die Legeeinrichtung 40a bzw. die Materialzuführungseinheit 10, die Schneideinrichtung 20, die Zuführungseinrichtung 30 und die Legeeinrichtung 40 jeweils in einem Legekopf 7 bzw. 7a zusammengefasst sein. Dies ist jedoch nicht beschränkend, und es ist ebenfalls möglich, dass ein Legekopf 7, 7a, nur die Legeeinrichtung 40, 40a oder neben der Legeeinrichtung 40, 40a auch die Zuführungseinrichtung 30, 30a und gegebenenfalls die Schneideinrichtung 20, 20a umfasst.

Wie im Fall von im Stand der Technik bekannten Tapelegevorrichtungen 1 sind die Legeköpfe 7a, 7b bzw. die darin enthaltenen Einheiten so eingerichtet, dass in einem Arbeitstakt zwei oder mehrere simultan abzulegende Tapes 5, 5a, welche jeweils eine Breite B aufweisen, um diese Breite B, oder um ein mehrfaches dieser Breite B zueinander beabstandet abgelegt werden, wobei in einem, oder gegebenenfalls in mehreren nachfolgen(den) Arbeitstakt(en) durch Ablegen weiterer Tapes 5, 5a die verbleibenden Lücken zwischen bereits gelegten Tapes 5, 5a aufgefüllt werden, um eine geschlossene Tapelage auszubilden. Dabei kann ebenfalls vorgesehen sein, dass, wie bekannt, während des Ablegens von Tapes 5, 5a bereits zuvor abgelegte Tapes 5, 5a zum Beispiel mittels hierzu vorgesehenen Ultraschalleinrichtungen an der oder den darunter liegenden Tapelagen angeheftet werden, beispielsweise durch Plastifizieren, oder zumindest teilweise mit der oder den darunter liegenden Tapelagen zu einem Laminat konsolidiert werden. Dieses Vorgehen kann für jede weitere Tapelage wiederholt werden.

Wie in den Fig. 1 und 2 dargestellt, sind die Legeeinrichtung 40, 40a, die Zuführungseinrichtung 30, 30a und die Schneideinrichtung 20, 20a bevorzugt mit Transportbändern 25, 25a, 31, 31a, 41, 41a als flächiges Transportelement ausgeführt, die um jeweilige Umlenkrollen 26, 32, 42 endlos umlaufen. In der Zuführungseinrichtung 30, 30a werden dabei die Tapes 5, 5a aufliegend, das heißt, auf einer Oberseite der Zuführungseinrichtung 30, 30a auf dem Transportband 31, 31a aufliegend transportiert. Hingegen werden die einzelnen Tapes 5, 5a in der Legeeinrichtung 40, 40a jeweils "hängend" transportiert. Hierzu ist die Legeeinrichtung 40, 40a vorzugsweise mit einer Vakuumeinrichtung (nicht dargestellt) versehen, welche so mit dem Transportband 41, 41a der Legeeinrichtung 40, 40a verbunden ist, dass durch das Transportband 41, 41a hindurch Luft angesaugt und so ein Unterdruck aufgebaut werden kann, beispielsweise indem eine Vielzahl von Öffnungen in dem Transportband 41, 41a vorgesehen sind, durch welche die Luft angesaugt werden kann. Durch den so entstehenden Unterdruck kann ein auf dem Transportband 31, 31a der Zuführungseinrichtung 30, 30a aufliegender, der Legeeinrichtung 40, 40a zugeführte Tapes 5, 5a angesaugt werden, so dass er auf der Unterseite der Legeeinrichtung 40, 40a an dem Transportband 41, 41a anliegend gehalten wird.

Die Vakuumeinrichtung kann abgeschaltet werden, nachdem das Tape 5, 5a auf dem Legetisch 50 platziert wurde.

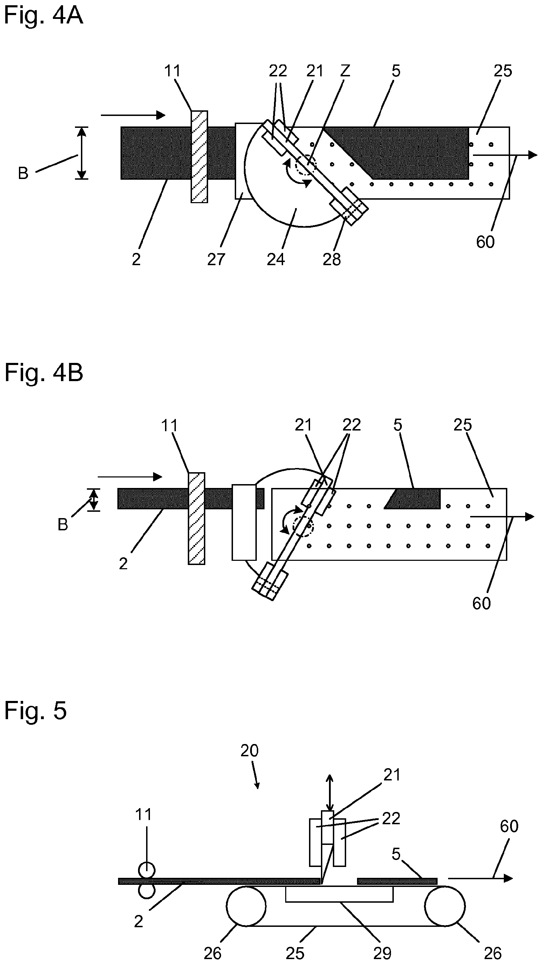

Mit Bezug auf die Fig. 3, 4A und 4B wird nun eine mögliche Ausführungsform der Schneideinrichtung 20 der Fig. 1 und 2 in größerem Detail beschrieben, wobei in der Fig. 3 eine Stellung des Schneidmessers 21 für einen Schnitt quer zur Bandrichtung dargestellt ist, während die Fig. 4A und 4B jeweils unterschiedliche, hierzu verschwenkte Stellungen des Schneidmessers 21 für einen "schiefen" bzw. winkeligen Schnitt des Tapes 5 darstellen.

Wie in den Fig. Fig. 3, 4A und 4B gezeigt, weist die Schneideinrichtung 20 ein Schneidmesser 21 als Schneidmittel auf, das über dem Transportband 25 angeordnet ist. Das Schneidmesser 21 ist an einem Ende mit einem Drehgelenk 28 schwenkbar gelagert und an seinem anderen Ende in einer Kulissenführung 22 gelagert, so dass das Schneidmesser 21, durch Heben und Senken des kulissenseitigen Endes mittels einer Betätigungsvorrichtung (nicht dargestellt) eine Schnittbewegung ausführen kann. Auf der, der Materialzuführungseinheit 10 zugewandten Seite des Schneidmessers 21 ist eine Schneidplatte 23 über dem Transportband 25 angeordnet. Die Schneidplatte 23 ist vorzugsweise als eine dünne Blechplatte von zwischen 1 und 4 mm Dicke, bevorzugt zwischen 1,5 und 3 mm Dicke und besonders bevorzugt mit einer Dicke von 2 mm ausgeführt, und kann in einem Abstand von weniger als 2 mm, bevorzugt weniger als 1 mm, besonders bevorzugt weniger als 0,5 mm zum Transportband 25 angeordnet sein.

Das Tape-Bandmaterial 2 wird nun von den Antriebswalzen 11, und gegebenenfalls unter Führung von einem oberen und einem unteren Leitblech 27 und einer Deckplatte 24, über die Schneidplatte 23 in den Raum zwischen dem Schneidmesser 21 und dem Transportband 25 geschoben bzw. gefördert. Da hier das Tape-Bandmaterial 2 als Endlostape zugeführt wird, ist ein Schieben über die Schneidplatte 23 ohne weiteres möglich. Jenseits des Schneidmessers 21 fällt das Tape-Bandmaterial 2 auf das Transportband 25 und wird, durch entsprechende Ansteuerung der Bewegung des Transportbandes 25 um die Umlenkrollen 26 mittels der Antriebswalzen 11 durch eine Steuereinrichtung (nicht dargestellt) weiter transportiert, bis eine gewünschte Länge des abzutrennenden Tapes 5 erreicht ist. In dieser Stellung werden das Transportband 25 und die Antriebswalzen 11 für das Abtrennen des Tapes 5 stillgesetzt. Alternativ kann auch das Transportband 25 stillstehen, solange das Tape-Bandmaterial 2 mit den Antriebswalzen 11 gefördert und über das Transportband 25 gleiten kann.

Wie in den Fig. 3, 4A und 4B zu erkennen, weist die Schneidplatte 23 eine gerade Kante auf, die als ein Gegenmesser dient, entlang dem die Klinge des Schneidmessers 21 nach Art eines Scherenschnitts schneidet, um so das Tape-Bandmaterial 2 zu schneiden und das Tape 5 von diesem abzutrennen. Nachdem der Schnitt erfolgt ist, fällt auch das schneidmesserseitige Ende des frisch abgetrennten Tapes 5 auf das Transportband 25 und kann von diesem weitertransportiert werden in Richtung zur Legeeinrichtung 40. Da somit das abgetrennte Tape 5 immer auf dem Transportband 25 zu liegen kommt, kann dieser selbst im Fall kurzer und kürzester Schneidlängen, beispielsweise im Fall von Tapes 5, die lediglich eine Länge von 10 mm, 5 mm oder weniger aufweisen, sicher und zuverlässig abtransportiert werden.

Weiterhin ergibt sich durch die vorgenannte Ausgestaltung, dass Tape-Abfall-Stücke, wie sie beispielsweise beim Anpassen des Schnittwinkels an die Geometrie der zu legenden Tapestruktur entstehen, sicher vom Transportband 25 aufgenommen und aus der Tapelegevorrichtung 1 ausgeschleust werden können.

Die zuverlässige Aufnahme von Tape-Streifen 5 auf dem Transportband 25 kann in einer bevorzugten Ausgestaltung noch verbessert werden, wenn das Transportband 25 als Vakuumband ausgebildet ist und der Tape-Streifen 5 während oder nach dem Schneidvorgang auf dem Transportband 25 durch einen leichten Unterdruck anhaftet und fixiert werden kann.

Die Schneidplatte 23 ist vorzugsweise mechanisch mit der Kulissenführung 22, in der das Schneidmesser 21 geführt wird, verbunden, und die Einheit aus Schneidplatte 23, Kulissenführung 22, Schneidmesser 21 und Drehgelenk 28 ist um eine Drehachse Z drehbar gelagert, die vorzugsweise im Wesentlichen senkrecht zur Ebene der Auflagefläche des Transportbandes 25 angeordnet ist und damit im Wesentlichen senkrecht zur Ebene steht, in der das Tape-Bandmaterial 2 zugeführt wird, und kann mittels einem Drehantrieb (nicht dargestellt) unter Steuerung der Steuereinrichtung (nicht dargestellt) stufenlos im Drehwinkel verstellt werden, beispielsweise in einem Bereich von ± 50°, um einen gewünschten Schnittwinkel, in dem ein Tape 5 geschnitten werden soll, einzustellen. Unabhängig vom Schneidwinkel fällt das abgetrennte Tape 5 immer vollständig auf das Transportband 25.

Wie in den Fig. 4A und 4B weiter zu erkennen, ist es mit der Schneideinrichtung 20 dieser Ausführungsform auch möglich, unterschiedliche breite Tape-Bandmaterialien 2 zu verwenden, ohne dass hierzu eine Umkonfiguration der Schneideinrichtung 20 notwendig ist. Es ist hierbei besonders vorteilhaft, wenn eine Seitenkante des Tape-Bandmaterials 2 als Führungskante dient, die insbesondere mit einer gleichen Seitenkante des flächigen Transportelements, wie beispielsweise des Transportbandes 25 flüchtig ausgerichtet ist. Dies kann beispielsweise dadurch unterstützt werden, dass an dieser Seitenkante des Transportbandes 25 ein seitliches Leitblech (nicht dargestellt) angeordnet wird, das als Anschlag und Führung für das Tape-Bandmaterial 2 bzw. für davon abgetrennte Tapes 5 dient. Auf diese Weise kann eine stets gleichbleibende, in der Position unveränderte und wohldefinierte Lage dieser Seitenkante des Tape-Bandmaterials 2 bzw. das Tape 5 relativ zum Transportband 25 sichergestellt werden. Dementsprechend wirken sich unterschiedliche Breiten des Tape-Bandmaterials 2 bzw. das davon abgetrennten Tape 5 nur auf die Lage der gegenüberliegenden Seitenkante aus, welche Lage ausgehend von der Führungskante und durch die bekannte Breite des Tape-Bandmaterials 2 bzw. des Tapes 5 definiert wird. Auf diese Weise ist es möglich, auch bei Verwendung von Tape-Bandmaterialien 2 unterschiedlicher Breite eine jeweils wohldefinierte und genaue Positionierung des Tapes 5 auf dem Transportband 25, und damit in Folge auch in der Zuführungseinrichtung 30 und der Legeeinrichtung 40 zu erzielen, und so eine hohe Legepräzision sicherzustellen.

Eine weitere mögliche Ausführungsform der Schneideinrichtung 20 ist in der Fig. 5 dargestellt, wobei in dieser Ausführungsform der Schnitt direkt auf dem Transportband 25 erfolgt. Entsprechend braucht in dieser Ausführungsform nur das Schneidmesser 21, die Kulissenführung 22 und das Drehgelenk 28 vorgesehen werden, welche wiederum, ähnlich wie vorstehend beschrieben, als eine um eine Drehachse Z drehbar gelagerte, im Drehwinkel stufenlos verstellbare Einheit ausgeführt sein können. Das Schneidmesser 21 kann dabei vorteilhafter Weise geringfügig in das Transportband 25 einschneiden, beispielsweise in einem Bereich von 0 bis 3 mm, bevorzugt in einem Bereich von 0,3 mm bis 2 mm, besonders bevorzugt in einem Bereich von 0,5 mm bis 1,5 mm. Das Transportband 25 dient somit als Schneidmatrize. Vorzugsweise ist im Bereich des Schneidmessers 21 bzw. im Bereich, in dem das Schneidmesser 21 verschwenkt werden kann, eine Auflageplatte 29 vorgesehen, auf der das Transportband 25 aufliegend verläuft, wobei die Auflageplatte 29 verhindert, dass sich das Transportband 25 während des Schneidens unter der Kraft des Schneidmessers 21 durchbiegt. Bevorzugt kann auch vorgesehen sein, dass nach dem Schneiden und Abtrennen des Tapes 5 von dem Tape-Bandmaterial 2 zunächst nur das Transportband 25 bewegt wird, während die Antriebswalzen 11 weiter stillgesetzt verbleiben. Das Tape 5 kann somit räumlich von dem Ende des Tape-Bandmaterials 2 wegbewegt werden, so dass ein Abstand zum nächsten zu schneidenden Tape 5 hergestellt wird.

Die Ausführungsform der Fig. 5 hat gegenüber der Ausführungsform der Fig. 3 und 4A bis 4B den Vorteil einer einfacheren, kompakteren und kostengünstigeren Konstruktion, wobei allerdings zu berücksichtigen ist, dass das Transportband 25 auf Grund des wiederholten Einschneidens durch das Schneidmesser 21 im Lauf der Zeit verschleißen kann und ausgetauscht werden muss.

Im Übrigen kann auch bei der Schneideinrichtung 20 dieser Ausführungsform, sowie auch generell für die Zuführungseinrichtung 30 und die Legeeinrichtung 40 vorgesehen sein, dass die Seitenkante des Tape-Bandmaterials 2 bzw. des Tapes 5 als Führungskante dient, die insbesondere mit einer gleichen Seitenkante der flächigen Transportelemente wie beispielsweise der Transportbänder 25, 31 und/oder 41 flüchtig ausgerichtet ist.

Während in der vorstehenden Beschreibung der bevorzugten Ausführungsform eine Schneideinrichtung 20 mit einem um Umlenkrollen 26 umlaufenden, endlosen Transportband 25 ausgeführt ist, ist dies nicht beschränkend, und das Transportband 25 kann auch durch andere Arten von flächigen Transportelementen ersetzt werden. So kann zum Beispiel vorgesehen sein, dass die Schneideinrichtung 20 ein flächiges, insbesondere plattenförmiges Transportelement aufweist, mit einer plattenförmigen Auflagefläche, die in und entgegen der Transportrichtung 60 des Tape-Bandmaterials 2 verfahrbar ist. Beispielhaft kann das flächige Transportelement als eine Metallplatte, eine Kunststoffplatte, eine mit einem Kunststoff oder einem anderen Material beschichtete oder überzogene Metallplatte oder Kunststoffplatte ausgeführt sein, die mittels einer Linearführung gelagert und geführt wird, und die mittels einem Verfahrantrieb parallel zur Transportrichtung 60 des Tape-Bandmaterials hin- und herbewegt werden kann. Das Tape-Bandmaterial 2 und/oder die abgetrennten Tapes 5 kommen dabei auf der von der Oberfläche des plattenförmigen Transportelements gebildeten Auflagefläche zur Ablage. Das plattenförmige Transportelement kann insbesondere auch mit einer Vakuumeinrichtung zu einem sogenannten "Vakuumkasten" integriert werden, wobei die Vakuumeinrichtung einen Unterdruck erzeugt, mit dem das Tape-Bandmaterial 2 und/oder abgetrennte Tapes 5 auf der Auflagefläche gehalten werden.

Darüber hinaus ist es ebenfalls denkbar, auch die Zuführungseinrichtung 30 und/oder die Legeeinrichtung 40 in entsprechender Weise anstelle wie vorstehend beschrieben mit Transportbändern 31, 41 ebenfalls mit flächigen Transportelementen, wie insbesondere plattenförmigen Transportelementen, auszubilden, die ebenfalls entsprechend in und entgegen der Transportrichtung 60 der Tapes 5 hin- und her bewegt werden können.

### Bezugszeichenliste P1525

- 1: Tapelegevorrichtung
- 2: Tape-Bandmaterial
- 5: Tape
- 7, 7a: Legekopf
- 10, 10a: Materialzuführungseinheit
- 11, 11a: Antriebswalzen
- 12: Spule
- 20. 20a: Schneideinrichtung
- 21, 21a: Schneidmesser
- 22: Kulisse
- 23: Schneidplatte
- 24: Deckplatte
- 25, 25a: Transportband
- 26: Umlenkrollen
- 27: Leitblech
- 28: Drehgelenk
- 29: Auflageplatte
- 30, 30a: Zuführungseinrichtung
- 31, 31a: Transportband
- 32: Umlenkrollen
- 33: Abwurfbehälter
- 40, 40a: Legeeinrichtung
- 41, 41a: Transportband
- 42: Umlenkrollen
- 50: Legetisch
- 60: Transportrichtung
- B: Breite
- Z: Drehachse

## Patentansprüche

1. Tapelegevorrichtung (1), umfassend
eine Materialzuführungseinheit (10, 10a) zum Zuführen eines Tape-Bandmaterials (2), eine Schneideinrichtung (20, 20a) mit einem um eine Drehachse (Z) im Winkel verstellbaren Schneidmittel zum Abtrennen eines Tapes (5, 5a) von dem Tape-Bandmaterial (2), und eine Legeeinrichtung (40, 40a) zum Aufnehmen und zum Platzieren des abgetrennten Tapes (5, 5a) auf einem Legetisch (50), **dadurch gekennzeichnet, dass** die Schneideinrichtung (20, 20a) ein, als ein um Umlenkrollen (26) umlaufendes, endloses Transportband (25, 25a) ausgeführtes flächiges Transportelement aufweist, wobei das Tape-Bandmaterial (2) zwischen das Schneidmittel und das als ein um Umlenkrollen (26) umlaufendes, endloses Transportband (25, 25a) ausgeführte flächige Transportelement zugeführt werden kann und das Tape-Bandmaterial (2) auf bzw. über dem als ein um Umlenkrollen (26) umlaufendes, endloses Transportband (25, 25a) ausgeführten flächigen Transportelement geschnitten werden kann, um das Tape (5, 5a) von dem Tape-Bandmaterial (2) abzutrennen.

2. Tapelegevorrichtung (1) nach Anspruch 1, **dadurch gekennzeichnet, dass** die Schneideinrichtung (20, 20a) weiter eine Vakuumeinrichtung aufweist, welche mit dem flächigen Transportelement derart verbunden ist, um das Tape-Bandmaterial (2) und/oder die abgetrennten Tapes (5, 5a) mittels von der Vakuumeinrichtung erzeugten Unterdruck auf dem flächigen Transportelement zu halten.

3. Tapelegevorrichtung (1) nach einem der Ansprüche 1 oder 2, **dadurch gekennzeichnet, dass** in der Schneideinrichtung (20, 20a) das Tape-Bandmaterial (2) auf dem flächigen Transportelement aufliegend zwischen das Schneidmittel und flächige Transportelement zugeführt wird und das Tape-Bandmaterial (2) auf dem flächigen Transportelement aufliegend geschnitten wird.

4. Tapelegevorrichtung (1) nach Anspruch 3, **dadurch gekennzeichnet, dass** das Schneidmittel in einem Bereich von 0 bis 3 mm, bevorzugt in einem Bereich von 0,3 mm bis 2 mm, besonders bevorzugt in einem Bereich von 0,5 mm bis 1,5 mm in das flächige Transportelement hinein schneidet.

5. Tapelegevorrichtung (1) nach einem der vorstehenden Ansprüche , **dadurch gekennzeichnet, dass** die Schneideinrichtung (20, 20a) weiter eine Schneidplatte (23) aufweist, die über dem flächigen Transportelement und in Transportrichtung (60) des Tape-Bandmaterials (2) vor dem Schneidmittel angeordnet ist, wobei das Tape-Bandmaterial (2) auf der Schneidplatte (23) aufliegend geführt ist, wobei die Schneidplatte (23) gemeinsam mit dem Schneidmittel verschwenkbar ist, und wobei die Schneidplatte (23) eine Schneidkante definiert, entlang derer das Schneidmittel das Tape-Bandmaterial (2) zur Abtrennung des Tapes (5, 5a) schneidet.

6. Tapelegevorrichtung (1) nach Anspruch 5, **dadurch gekennzeichnet, dass** die Schneidplatte (23) halbkreisförmig ausgebildet ist und/oder die Schneidplatte (23) eine Dicke im Bereich von 1 bis 5 mm, bevorzugt im Bereich von 2 bis 4 mm, besonders bevorzugt eine Dicke von 3 mm aufweist.

7. Tapelegevorrichtung (1) nach einem der vorstehenden Ansprüche, **dadurch gekennzeichnet, dass** das Schneidmittel als ein Schneidmesser (21, 21a) ausgeführt ist, und/oder dass das Schneidmittel mittels einer Ultraschalleinrichtung mit Ultraschall beaufschlagt werden kann.

8. Tapelegevorrichtung (1) nach Anspruch 7, **dadurch gekennzeichnet, dass** das Schneidmesser (21, 21a) im Bereich eines Endes an einem Drehgelenk (28) um eine horizontale Achse schwenkbar gelagert ist, und/oder im Bereich des anderen Endes in einer Kulissenführung (22) geführt wird.

9. Tapelegevorrichtung (1) nach einem der vorstehenden Ansprüche, **dadurch gekennzeichnet, dass** die Legeeinrichtung (40, 40a) ein flächiges Transportelement, vorzugsweise ein um Umlenkrollen (42) umlaufendes, endloses Transportband (41, 41a), und eine mit dem flächigen Transportelement verbundene Vakuumeinrichtung aufweist, wobei die einzelnen Tapes (5, 5a) auf einer Unterseite der Legeeinrichtung (40, 40a) aufgenommen und mittels dem von der Vakuumeinrichtung erzeugten Unterdruck an dem flächigen Transportelement gehalten werden können.

10. Tapelegevorrichtung (1) nach einem der vorstehenden Ansprüche, **dadurch gekennzeichnet, dass** die zwischen der Schneideinrichtung (20, 20a) und der Legeeinrichtung (40, 40a) zumindest eine Zuführungseinrichtung (30, 30a) angeordnet ist, welche ein flächiges Transportelement, vorzugsweise ein um Umlenkrollen (32) umlaufendes, endloses Transportband (31, 31a) aufweist, und derart eingerichtet ist, in der Schneideinrichtung (20, 20a) abgetrennte Tapes (5, 5a) aufzunehmen und der Legeeinrichtung (40, 40a) zuzuführen, wobei die einzelnen Tapes (5, 5a) auf dem flächigen Transportelement aufliegend transportiert werden.

11. Tapelegeverfahren, umfassend:
Zuführen eines Tape-Bandmaterials (2) mittels einer Materialzuführungseinheit (10, 10a); Abtrennen eines Tapes (5, 5a) von dem Tape-Bandmaterial (2) mittels einer Schneideinrichtung (20, 20a), wobei die Schneideinrichtung (20, 20a) ein um eine Drehachse (Z) im Winkel verstellbares Schneidmittel aufweist, und Aufnehmen und Platzieren des abgetrennten Tapes (5, 5a) auf einem Legetisch (50) mittels einer Legeeinrichtung (40, 40a), **dadurch gekennzeichnet, dass** die Schneideinrichtung (20, 20a) ein als ein um Umlenkrollen (26) umlaufendes, endloses Transportband (25, 25a) ausgeführtes flächiges Transportelement aufweist, und dass das Tape-Bandmaterial (2) zwischen das Schneidmittel und das als ein um Umlenkrollen (26) umlaufendes, endloses Transportband (25, 25a) ausgeführte flächige Transportelement zugeführt wird und das Tape-Bandmaterial (2) auf bzw. über dem als ein um Umlenkrollen (26) umlaufendes, endloses Transportband (25, 25a) ausgeführten flächigen Transportelement geschnitten wird, um das Tape (5, 5a) von dem Tape-Bandmaterial (2) abzutrennen.

12. Tapelegeverfahren nach Anspruch 11, **dadurch gekennzeichnet, dass** die Schneideinrichtung (20, 20a) weiter eine Vakuumeinrichtung aufweist, welche mit dem flächigen Transportelement derart verbunden ist, wobei das Tape-Bandmaterial (2) und/oder das Tape (5, 5a) mittels von der Vakuumeinrichtung erzeugtem Unterdruck auf dem flächigen Transportelement gehalten wird.

13. Tapelegeverfahren nach einem der Ansprüche 11 oder 12, **dadurch gekennzeichnet, dass** in der Schneideinrichtung (20, 20a) das Tape-Bandmaterial (2) auf dem flächigen Transportelement aufliegend zwischen das Schneidmittel und das flächige Transportelement zugeführt wird und das Tape-Bandmaterial (2) auf dem flächigen Transportelement aufliegend geschnitten wird.

14. Tapelegeverfahren nach einem der Ansprüche 11 bis 13, **dadurch gekennzeichnet, dass** in der die Schneideinrichtung (20, 20a) weiter eine Schneidplatte (23) aufweist, die über dem flächigen Transportelement und in Transportrichtung (60) des Tape-Bandmaterials (2) vor dem Schneidmittel angeordnet ist, wobei das Tape-Bandmaterial (2) auf der Schneidplatte (23) aufliegend geführt wird, wobei die Schneidplatte (23) gemeinsam mit dem Schneidmittel verschwenkt wird, und wobei die Schneidplatte (23) eine Schneidkante definiert, entlang derer das Schneidmittel das Tape-Bandmaterial (2) zur Abtrennung des Tapes (5, 5a) schneidet.

15. Tapelegeverfahren nach einem der Ansprüche 11 bis 14, **dadurch gekennzeichnet, dass** die Legeeinrichtung (40, 40a) ein flächiges Transportelement, vorzugsweise ein um Umlenkrollen (42) umlaufendes, endloses Transportband (41, 41a), und eine mit dem flächigen Transportelement verbundene Vakuumeinrichtung aufweist, wobei die einzelnen Tapes (5) auf einer Unterseite der Legeeinrichtung (40, 40a) aufgenommen und mittels dem von der Vakuumeinrichtung erzeugten Unterdruck an dem flächigen Transportelement gehalten werden, und/oder dass zwischen der Schneideinrichtung (20, 20a) und der Legeeinrichtung (40, 40a) zumindest eine Zuführungseinrichtung (30, 30a) angeordnet ist, welche ein flächiges Transportelement, vorzugsweise ein um Umlenkrollen (32) umlaufendes, endloses Transportband (31, 31a), aufweist, wobei in der Schneideinrichtung (20, 20a) abgetrennte Tapes (5, 5a) von der Zuführungseinrichtung (30, 30a) aufgenommen, auf dem flächigen Transportelement aufliegend transportiert und der Legeeinrichtung (40, 40a) zugeführt werden.

16. Tapelegeverfahren nach Anspruch 15, **dadurch gekennzeichnet, dass** eine Seitenkante des Tape-Bandmaterials (2) bzw. des Tapes (5, 5a) als Führungskante dient, die in ihrer Position unverändert bleibt, so dass sich eine Änderung der Breite des Tape-Bandmaterials (2) nur auf der Gegenseite auswirkt, wobei die Führungskante bevorzugt mit einer Seitenkante des flächigen Transportelements der Schneideinrichtung (20, 20a) und/oder einer Seitenkante des flächigen Transportelements, der Zuführungseinrichtung (30, 30a) und/oder der Legeeinrichtung (40, 40a), insbesondere einer Seitenkante des Transportbandes (25, 25a, 31, 31a, 41, 41a) übereinstimmt.

## Claims

1. Tape-laying apparatus (1), comprising
a material feed unit (10, 10a) for feeding a tape strip material (2), a cutting device (20, 20a) having a cutting means for detaching a tape (5, 5a) from the tape strip material (2), the angle of which cutting means is adjustable about a pivot axis (Z), and a laying device (40, 40a) for picking up and for placing the detached tape (5, 5a) on a laying table (50), **characterised in that** the cutting device (20, 20a) has a planar transport element configured as an endless transport belt (25, 25a) circulating around guide rollers (26), wherein the tape strip material (2) can be fed between the cutting means and the planar transport element configured as an endless transport belt (25, 25a) circulating around guide rollers (26), and the tape strip material (2) can be cut on or above the planar transport element configured as an endless transport belt (25, 25a) circulating around guide rollers (26) in order to detach the tape (5, 5a) from the tape strip material (2).

2. Tape-laying apparatus (1) according to claim 1, **characterised in that** the cutting device (20, 20a) further comprises a vacuum device which is connected to the planar transport element in such a way as to hold the tape strip material (2) and/or the detached tapes (5, 5a) on the planar transport element by means of a partial vacuum generated by the vacuum device.

3. Tape-laying apparatus (1) according to either one of claims 1 and 2, **characterised in that** in the cutting device (20, 20a) the tape strip material (2) is fed between the cutting means and the planar transport element while being supported on the planar transport element, and the tape strip material (2) is cut while being supported on the planar transport element.

4. Tape-laying apparatus (1) according to claim 3, **characterised in that** the cutting means cuts into the planar transport element in a range of from 0 to 3 mm, preferably in a range of from 0.3 mm to 2 mm, especially preferably in a range of from 0.5 mm to 1.5 mm.

5. Tape-laying apparatus (1) according to any one of the preceding claims, **characterised in that** the cutting device (20, 20a) further comprises a cutting plate (23) which is arranged above the planar transport element and upstream of the cutting means in the transport direction (60) of the tape strip material (2), wherein the tape strip material (2) is guided supported on the cutting plate (23), the cutting plate (23) being pivotable together with the cutting means, and the cutting plate (23) defining a cutting edge along which the cutting means cuts the tape strip material (2) to detach the tape (5, 5a).

6. Tape-laying apparatus (1) according to claim 5, **characterised in that** the cutting plate (23) is semi-circular and/or the cutting plate (23) has a thickness in the range of from 1 to 5 mm, preferably in the range of from 2 to 4 mm, especially preferably a thickness of 3 mm.

7. Tape-laying apparatus (1) according to any one of the preceding claims, **characterised in that** the cutting means is configured as a cutting blade (21, 21a), and/or the cutting means can be acted upon by ultrasound by means of an ultrasonic device.

8. Tape-laying apparatus (1) according to claim 7, **characterised in that** the cutting blade (21, 21 a) is mounted on a pivot joint (28) in the region of one end so as to be pivotable about a horizontal axis, and/or is guided in a slotted guide means (22) in the region of its other end.

9. Tape-laying apparatus (1) according to any one of the preceding claims, **characterised in that** the laying device (40, 40a) has a planar transport element, preferably an endless transport belt (41, 41a) circulating around guide rollers (42), and a vacuum device connected to the planar transport element, wherein the individual tapes (5, 5a) can be picked up on an underside of the laying device (40, 40a) and held against the planar transport element by means of the partial vacuum generated by the vacuum device.

10. Tape-laying apparatus (1) according to any one of the preceding claims, **characterised in that** at least one feed device (30, 30a) is arranged between the cutting device (20, 20a) and the laying device (40, 40a), which feed device has a planar transport element, preferably an endless transport belt (31, 31 a) circulating around guide rollers (32), and is configured so as to pick up tapes (5, 5a) detached in the cutting device (20, 20a) and to feed them to the laying device (40, 40a), the individual tapes (5, 5a) being transported supported on the planar transport element.

11. Tape-laying method, comprising:
feeding of a tape strip material (2) by means of a material feed unit (10, 10a); detachment of a tape (5, 5a) from the tape strip material (2) by means of a cutting device (20, 20a), the cutting device (20, 20a) having a cutting means the angle of which is adjustable about a pivot axis (Z); and pick-up and placement of the detached tape (5, 5a) on a laying table (50) by means of a laying device (40, 40a), **characterised in that** the cutting device (20, 20a) has a planar transport element configured as an endless transport belt (25, 25a) circulating around guide rollers (26), and the tape strip material (2) is fed between the cutting means and the planar transport element configured as an endless transport belt (25, 25a) circulating around guide rollers (26), and the tape strip material (2) is cut on or above the planar transport element configured as an endless transport belt (25, 25a) circulating around guide rollers (26) in order to detach the tape (5, 5a) from the tape strip material (2).

12. Tape-laying method according to claim 11, **characterised in that** the cutting device (20, 20a) further comprises a vacuum device which is connected to the planar transport element, the tape strip material (2) and/or the tape (5, 5a) being held on the planar transport element by means of a partial vacuum generated by the vacuum device.

13. Tape-laying method according to either one of claims 11 and 12, **characterised in that** in the cutting device (20, 20a) the tape strip material (2) is fed between the cutting means and the planar transport element while being supported on the planar transport element, and the tape strip material (2) is cut while being supported on the planar transport element.

14. Tape-laying method according to any one of claims 11 to 13, **characterised in that** the cutting device (20, 20a) further comprises a cutting plate (23) which is arranged above the planar transport element and upstream of the cutting means in the transport direction (60) of the tape strip material (2), wherein the tape strip material (2) is guided supported on the cutting plate (23), the cutting plate (23) being pivotable together with the cutting means, and the cutting plate (23) defining a cutting edge along which the cutting means cuts the tape strip material (2) to detach the tape (5, 5a).

15. Tape-laying method according to any one of claims 11 to 14, **characterised in that** the laying device (40, 40a) has a planar transport element, preferably an endless transport belt (41, 41a) circulating around guide rollers (42), and a vacuum device connected to the planar transport element, wherein the individual tapes (5, 5a) are picked up on an underside of the laying device (40, 40a) and held against the planar transport element by means of the partial vacuum generated by the vacuum device, and/or at least one feed device (30, 30a) is arranged between the cutting device (20, 20a) and the laying device (40, 40a), which feed device has a planar transport element, preferably an endless transport belt (31, 31a) circulating around guide rollers (32), wherein tapes (5, 5a) detached in the cutting device (20, 20a) are picked up by the feed device (30, 30a), transported supported on the planar transport element and fed to the laying device (40, 40a).

16. Tape-laying method according to claim 15, **characterised in that** a side edge of the tape strip material (2) or of the tape (5, 5a), as the case may be, serves as a guide edge, the position of which remains unchanged, so that any change in the width of the tape strip material (2) affects only the opposite side, wherein the guide edge preferably coincides with a side edge of the planar transport element of the cutting device (20, 20a) and/or with a side edge of the planar transport element of the feed device (30, 30a) and/or of the laying device (40, 40a), especially a side edge of the transport belt (25, 25a, 31, 31a, 41, 41a).

## Revendications

1. Dispositif (1) de pose de rubans, comprenant
une unité (10, 10a) d'alimentation en matériau, conçue pour délivrer un matériau (2) en bandes de rubans ; un appareil de sectionnement (20, 20a) équipé d'un moyen sectionneur à faculté de réglage angulaire autour d'un axe de rotation (Z), en vue de séparer un ruban (5, 5a) d'avec ledit matériau (2) en bandes de rubans ; et un appareil applicateur (40, 40a) conçu pour prélever ledit ruban séparé (5, 5a) et pour le mettre en place sur une table de pose (50), **caractérisé par le fait que**
l'appareil de sectionnement (20, 20a) est muni d'un élément de transport aplati réalisé sous la forme d'une bande transporteuse (25, 25a) sans fin, tournant autour de rouleaux de renvoi (26), sachant que le matériau (2) en bandes de rubans peut être délivré entre le moyen sectionneur et ledit élément de transport aplati réalisé sous la forme d'une bande transporteuse (25, 25a) sans fin, tournant autour de rouleaux de renvoi (26), et sachant que ledit matériau (2) en bandes de rubans peut être respectivement sectionné sur ledit élément de transport aplati réalisé sous la forme d'une bande transporteuse (25, 25a) sans fin, tournant autour de rouleaux de renvoi (26), ou au-dessus dudit élément, de manière à séparer le ruban (5, 5a) d'avec ledit matériau (2) en bandes de rubans.

2. Dispositif (1) de pose de rubans, selon la revendication 1, **caractérisé par le fait que** l'appareil de sectionnement (20, 20a) est doté, en outre, d'un appareil de création d'un vide qui est raccordé à l'élément de transport aplati en vue de retenir le matériau (2) en bandes de rubans et/ou le ruban séparé (5, 5a), sur ledit élément de transport aplati, au moyen d'une dépression engendrée par ledit appareil de création d'un vide.

3. Dispositif (1) de pose de rubans, selon l'une des revendications 1 ou 2, **caractérisé par le fait que**, dans l'appareil de sectionnement (20, 20a), le matériau (2) en bandes de rubans est délivré entre le moyen sectionneur et l'élément de transport aplati, en reposant à plat sur ledit élément de transport aplati, et ledit matériau (2) en bandes de rubans est sectionné en reposant à plat sur ledit élément de transport aplati.

4. Dispositif (1) de pose de rubans, selon la revendication 3, **caractérisé par le fait que** le moyen sectionneur effectue un sectionnement pénétrant, dans l'élément de transport aplati, dans une plage de 0 à 3 mm, préférentiellement dans une plage de 0,3 mm à 2 mm, dans une plage de 0,5 mm à 1,5 mm avec préférence particulière.

5. Dispositif (1) de pose de rubans, selon l'une des revendications précédentes, **caractérisé par le fait que** l'appareil de sectionnement (20, 20a) est pourvu, par ailleurs, d'une platine de sectionnement (23) implantée au-dessus de l'élément de transport aplati, et avant le moyen sectionneur dans la direction (60) de transport du matériau (2) en bandes de rubans, ledit matériau (2) en bandes de rubans étant guidé en reposant à plat sur ladite platine de sectionnement (23), ladite platine de sectionnement (23) étant apte à pivoter conjointement audit moyen sectionneur, et ladite platine de sectionnement (23) définissant une arête de coupe le long de laquelle ledit moyen sectionneur sectionne ledit matériau (2) en bandes de rubans, afin de séparer le ruban (5, 5a).

6. Dispositif (1) de pose de rubans, selon la revendication 5, **caractérisé par le fait que** la platine de sectionnement (23) est de réalisation semi-circulaire, et/ou ladite platine de sectionnement (23) présente une épaisseur située dans la plage de 1 à 5 mm, préférentiellement dans la plage de 2 à 4 mm, une épaisseur de 3 mm avec préférence particulière.

7. Dispositif (1) de pose de rubans, selon l'une des revendications précédentes, **caractérisé par le fait que** le moyen sectionneur est réalisé sous la forme d'une lame sectionneuse (21, 21a) ; et/ou **par le fait que** ledit moyen sectionneur peut être sollicité par des ultrasons à l'aide d'un appareil à ultrasons.

8. Dispositif (1) de pose de rubans, selon la revendication 7, **caractérisé par le fait que** la lame sectionneuse (21, 21a) est montée à pivotement autour d'un axe horizontal sur une articulation tournante (28), dans la région d'une extrémité, et/ou est guidée dans un guide de coulissement (22) dans la région de l'autre extrémité.

9. Dispositif (1) de pose de rubans, selon l'une des revendications précédentes, **caractérisé par le fait que** l'appareil applicateur (40, 40a) comprend un élément de transport aplati, de préférence une bande transporteuse (41, 41a) sans fin, tournant autour de rouleaux de renvoi (42), et un appareil de création d'un vide raccordé audit élément de transport aplati, sachant que les rubans individuels (5, 5a) peuvent être reçus sur une face inférieure dudit appareil applicateur (40, 40a) et peuvent être retenus, sur ledit élément de transport aplati, au moyen de la dépression engendrée par ledit appareil de création d'un vide.

10. Dispositif (1) de pose de rubans, selon l'une des revendications précédentes, **caractérisé par le fait qu'**au moins un appareil d'alimentation (30, 30a), interposé entre l'appareil de sectionnement (20, 20a) et l'appareil applicateur (40, 40a), comporte un élément de transport aplati, de préférence une bande transporteuse (31, 31a) sans fin, tournant autour de rouleaux de renvoi (32), et est agencé de manière à prélever des rubans (5, 5a) séparés dans ledit appareil de sectionnement (20, 20a) et à les délivrer audit appareil applicateur (40, 40a), les rubans individuels (5, 5a) étant transportés en reposant à plat sur ledit élément de transport aplati.

11. Procédé de pose de rubans, consistant :
à délivrer un matériau (2) en bandes de rubans au moyen d'une unité (10, 10a) d'alimentation en matériau ; à séparer un ruban (5, 5a) d'avec ledit matériau (2) en bandes de rubans, au moyen d'un appareil de sectionnement (20, 20a), lequel appareil de sectionnement (20, 20a) est pourvu d'un moyen sectionneur à faculté de réglage angulaire autour d'un axe de rotation (Z) ; et à prélever ledit ruban séparé (5, 5a) et à le mettre en place sur une table de pose (50), au moyen d'un appareil applicateur (40, 40a), **caractérisé par le fait que** l'appareil de sectionnement (20, 20a) est muni d'un élément de transport aplati réalisé sous la forme d'une bande transporteuse (25, 25a) sans fin, tournant autour de rouleaux de renvoi (26) ; et **par le fait que** le matériau (2) en bandes de rubans est délivré entre le moyen sectionneur et l'élément de transport aplati réalisé sous la forme d'une bande transporteuse (25, 25a) sans fin, tournant autour de rouleaux de renvoi (26), et ledit matériau (2) en bandes de rubans est respectivement sectionné sur ledit élément de transport aplati réalisé sous la forme d'une bande transporteuse (25, 25a) sans fin, tournant autour de rouleaux de renvoi (26), ou au-dessus dudit élément, de manière à séparer le ruban (5, 5a) d'avec ledit matériau (2) en bandes de rubans.

12. Procédé de pose de rubans, selon la revendication 11, **caractérisé par le fait que** l'appareil de sectionnement (20, 20a) est doté, en outre, d'un appareil de création d'un vide qui est raccordé à l'élément de transport aplati en vue de retenir le matériau (2) en bandes de rubans et/ou le ruban séparé (5, 5a), sur ledit élément de transport aplati, au moyen d'une dépression engendrée par ledit appareil de création d'un vide.

13. Procédé de pose de rubans, selon l'une des revendications 11 ou 12, **caractérisé par le fait que**, dans l'appareil de sectionnement (20, 20a), le matériau (2) en bandes de rubans est délivré entre le moyen sectionneur et l'élément de transport aplati, en reposant à plat sur ledit élément de transport aplati, et ledit matériau (2) en bandes de rubans est sectionné en reposant à plat sur ledit élément de transport aplati.

14. Procédé de pose de rubans, selon l'une des revendications 11 à 13, **caractérisé par le fait que** l'appareil de sectionnement (20, 20a) est pourvu, par ailleurs, d'une platine de sectionnement (23) implantée au-dessus de l'élément de transport aplati, et avant le moyen sectionneur dans la direction (60) de transport du matériau (2) en bandes de rubans, ledit matériau (2) en bandes de rubans étant guidé en reposant à plat sur ladite platine de sectionnement (23), ladite platine de sectionnement (23) étant animée de pivotements conjointement audit moyen sectionneur, et ladite platine de sectionnement (23) définissant une arête de coupe le long de laquelle ledit moyen sectionneur sectionne ledit matériau (2) en bandes de rubans, afin de séparer le ruban (5, 5a).

15. Procédé de pose de rubans, selon l'une des revendications 11 à 14, **caractérisé par le fait que** l'appareil applicateur (40, 40a) comprend un élément de transport aplati, de préférence une bande transporteuse (41, 41a) sans fin, tournant autour de rouleaux de renvoi (42), et un appareil de création d'un vide raccordé audit élément de transport aplati, sachant que les rubans individuels (5) sont reçus sur une face inférieure dudit appareil applicateur (40, 40a) et sont retenus, sur ledit élément de transport aplati, au moyen de la dépression engendrée par ledit appareil de création d'un vide ; et/ou **par le fait qu'**au moins un appareil d'alimentation (30, 30a), interposé entre l'appareil de sectionnement (20, 20a) et ledit appareil applicateur (40, 40a), comporte un élément de transport aplati, de préférence une bande transporteuse (31, 31a) sans fin, tournant autour de rouleaux de renvoi (32), sachant que des rubans (5, 5a), séparés dans ledit appareil de sectionnement (20, 20a), sont prélevés par ledit appareil d'alimentation (30, 30a), transportés en reposant à plat sur ledit élément de transport aplati, et délivrés audit appareil applicateur (40, 40a).

16. Procédé de pose de rubans, selon la revendication 15, **caractérisé par le fait qu'**une arête latérale respective du matériau (2) en bandes de rubans, ou du ruban (5, 5a), remplit la fonction d'une arête de guidage dont l'emplacement demeure inchangé, de telle sorte qu'une modification de la largeur dudit matériau (2) en bandes de rubans se répercute uniquement sur la face opposée, sachant que ladite arête de guidage coïncide, de préférence, avec une arête latérale de l'élément de transport aplati de l'appareil de sectionnement (20, 20a) et/ou avec une arête latérale dudit élément de transport aplati, de l'appareil d'alimentation (30, 30a) et/ou de l'appareil applicateur (40, 40a), notamment avec une arête latérale de la bande transporteuse (25, 25a, 31, 31a, 41, 41a).
